# EUROPÄISCHE PATENTSCHRIFT

(11) **EP 1 719 658 B1**
(45) Veröffentlichungstag und Bekanntmachung des Hinweises auf die Patenterteilung: **16.04.2008**
(21) Anmeldenummer: 06113154.6
(22) Anmeldetag: 26.04.2006
(51) Int. Cl.: B60K 15/077, F02M 37/02, F02M 37/10

(54) **In einem Kraftstoffbehälter angeordnete Fördereinheit**
Supply unit arranged in a fuel tank
Unité d'alimentation arrangée dans un réservoir à carburant

(30) Priorität: 04.05.2005 DE 102005021323
(43) Veröffentlichungstag der Anmeldung: 08.11.2006
(73) Patentinhaber: VDO Automotive AG, 93055 Regensburg (DE)
(72) Erfinder: Markefka, Klaus, 61197, Florstadt (DE)

(56) Entgegenhaltungen:
- DE-A1- 4 411 566
- FR-A- 2 747 619
- US-A1- 2004 161 342

## Beschreibung

Gegenstand der Erfindung ist eine in einem Kraftstoffbehälter eines Kraftfahrzeugs angeordnete Fördereinheit mit einem Schwalltopf, der in seinem Boden oder im unteren Bereich seiner Seitenwand zumindest eine Öffnung besitzt, einer in dem Schwalltopf angeordneten Kraftstoffpumpe zum Fördern von Kraftstoff aus dem Schwalltopf und einer mit der Kraftstoffpumpe mechanisch verbundenen Saugstrahlpumpe zum Fördern von Kraftstoff aus dem Kraftstoffbehälter in den Schwalltopf, wobei die Saugstrahlpumpe einen Ansaugbereich aufweist, der mit der Öffnung im Schwalltopf verbunden ist. Solche Fördereinheiten werden verwendet, um Kraftstoff aus dem Kraftstoffbehälter zu einer Brennkraftmaschine des Kraftfahrzeugs zu fördern.

Derartige Fördereinheiten sind seit langem Stand der Technik und somit bekannt z.B. aus US 2004/161342 A1. Die Kraftstoffpumpe ist dabei oftmals in einem Pumpenhalter gelagert. Der Pumpenhalter dient einerseits zur Halterung der Kraftstoffpumpe in der Fördereinheit und andererseits zur Dämpfung von Geräuschen und Vibrationen, die im Betrieb der Kraftstoffpumpe von dieser erzeugt werden. Die Saugstrahlpumpe dient der Befüllung des Schwalltopfes, so dass die Kraftstoffpumpe permanent Kraftstoff ansaugen und über die Vorlaufleitung zur Brennkraftmaschine fördert. Insbesondere bei einem niedrigen Kraftstoffpegel im Kraftstoffbehälter wird auf diese Weise auch bei Kurvenfahrten oder dem Fahren bergan oder bergab gewährleistet, dass ausreichend Kraftstoff an der Ansaugöffnung der Kraftstoffpumpe zur Verfügung steht. Die Saugstrahlpumpe ist dazu oberhalb einer im Boden des Schwalltopfes befindlichen Öffnung angeordnet und deckt diese gegenüber dem Inneren des Schwalltopfes ab. Der Bereich der Öffnung ist dem Ansaugbereich der Saugstrahlpumpe zugeordnet, über den der Kraftstoff aus dem Kraftstoffbehälter angesaugt wird. Aufgrund der Fahrdynamik ist die Fördereinheit wechselnden Belastungen ausgesetzt. Neben kurzeitigen Belastungen, wie Stöße und Vibrationen, wirken auf die Kraftstoffpumpe aber auch Beschleunigungen, die eine Auslenkung der Kraftstoffpumpe im Bereich ihres Masseschwerpunktes oder des Pumpenhalters erzeugen. Durch diese Auslenkungen wird auch die mit der Kraftstoffpumpe verbundene Saugstrahlpumpe verschwenkt, so dass es zu einem seitlichen Anheben der Saugstrahlpumpe kommt, wodurch die Öffnung im Schwalltopfboden nicht mehr vollständig abgedeckt ist. Der somit erzwungene Druckausgleich zwischen dem Ansaugbereich und der Umgebung bewirkt, dass die Förderleistung der Saugstrahlpumpe zusammenbricht.

Die Aufgabe der Erfindung besteht darin, eine Fördereinheit zu schaffen, die unter allen Umständen einen zuverlässigen Betrieb der Saugstrahlpumpe gewährleistet.

Erfindungsgemäß wird die Aufgabe dadurch gelöst, dass im Boden des Schwalltopfes eine konkav ausgebildete Wölbung angeordnet ist, deren Radius dem Schwenkbereich des Ansaugbereichs der Saugstrahlpumpe angepasst ist, und dass die Öffnung im Bereich der Wölbung angeordnet ist.

Aufgrund dieser Ausbildung ist der Boden des Schwalltopfes in diesem Bereich an die Auslenkungsbewegungen der Saugstrahlpumpe angepasst, so dass ein Abheben des Ansaugbereichs der Saugstrahlpumpe vermieden wird. Darüber hinaus ist der Ansaugbereich derart bemessen, dass auch bei einer Auslenkung desselben, die Öffnung von ihm immer überdeckt wird. Infolge dessen ist der Ansaugbereich der Saugstrahlpumpe auch unter rauen Betriebsbedingungen immer zuverlässig gegen die umgebenden Bereiche abgedichtet ist, so dass der für die Förderung von Kraftstoff notwendige Unterdruck im Ansaugbereich aufrechterhalten wird. Die Ausbildung des Bodens des Schwalltopfes erfordert dabei einen relativ geringen Aufwand, wodurch sich aufwändigere Maßnahmen im Bereich der Aufhängung der Kraftstoffpumpe vermeiden lassen. Die konkav ausgebildete Wölbung kann dabei entlang einer Achse oder entlang zweier Achsen ausgebildet sein.

Sofern im eingebauten Zustand der Fördereinheit die tiefste Stelle der Wölbung dem Niveau des übrigen Schwalltopfbodens entspricht, besitzt die Fördereinheit infolge der gleich bleibenden Ansaughöhe das gleiche Ansaugverhalten, wenn die Öffnung im Boden des Schwalltopfes an der tiefsten Stelle der Wölbung angeordnet ist.

Die konkav ausgebildete Wölbung lässt sich besondere einfach herstellen, wenn sie einteilig mit dem Boden des Schwalltopfes ausgebildet ist. Insbesondere durch Spritzgießen lässt sich die Wölbung ohne größeren Aufwand erzeugen.

Bisher bestehende Schwalltopfgeometrien können unverändert, bzw. nahezu unverändert bleiben, wenn die konkav ausgebildete Wölbung als separates Bauteil am Boden des Schwalltopfes befestigt ist. Dabei kann die ursprünglich im Schwalltopfboden vorhandene Öffnung erhalten bleiben. Die Befestigung des separaten Bauteils kann entweder mittels einer Rast- und Steckverbindung erfolgen oder das Bauteil kann mit dem Boden des Schwalltopfes verschweißt werden.

In einer anderen Ausgestaltung besitzt der Boden des Schwalltopfes eine Ausnehmung, in die das die konkav ausgebildete Wölbung aufweisende Bauteil eingesetzt ist. Die Größe der Ausnehmung im Boden des Schwalltopfes entspricht dabei in etwa der Größe des separaten Bauteils. Mit dem Einsetzen des Bauteils in den Boden wird zudem eine bodennahe Anordnung des Bauteils erreicht, so dass eine derart ausgebildete Fördereinheit über eine geringe Ansaughöhe verfügt. Zusätzliche Mittel zum Verbinden des Bauteils mit dem Boden des Schwalltopfes werden vermieden, wenn das Bauteil in die Ausnehmung eingepresst ist. Sofern das separate Bauteil aus Kunststoff besteht, führt dessen Quellen infolge des Kraftstoffs ebenfalls zu einer sicheren Verbindung mit dem Boden des Schwalltopfes. Ein lagegenaues Einsetzen des Bauteils in die Ausnehmung wird mit einem Bauteil sichergestellt, welches auf seiner dem Boden zugewandten Seite einen radial umlaufenden Bund besitzt, der sich im montierten Zustand am Boden des Schwalltopfes abstützt.

Bei verschiedenen Ausführungen ist die Saugstrahlpumpe nicht zentral sondern im Randbereich des Schwalltopfes angeordnet. Um auch bei diesen Ausführungen ein Abheben des Ansaugbereichs vom Boden des Schwalltopfes zu vermeiden, hat es sich als vorteilhaft herausgestellt, wenn sich die konkav ausgebildete Wölbung bis in den Bereich der Wandung des Schwalltopfes erstreckt.

Eine noch zuverlässigere Abdichtung des Ansaugbereichs gegenüber der konkav gewölbten Oberfläche wird insbesondere bei der Bewegung des Ansaugbereichs mit einer am Ansaugbereich befestigten Dichtung erreicht, die zwischen Ansaugbereich und Wölbung angeordnet ist.

An mehreren Ausführungsbeispielen wird die Erfindung näher erläutert. Es zeigen:
- Figur 1:: einen Schnitt durch eine Fördereinheit nach dem Stand der Technik,
- Figur 2:: einen Schnitt durch eine erfindungsgemäße Fördereinheit,
- Figur 3:: eine zweite Ausführungsform in vergrößerter Darstellung des Bereichs der Wölbung nach Figur 2,
- Figur 4:: eine dritte Ausführungsform nach Figur 3 und

- Figur 5:: eine vierte Ausführungsform nach Figur 2.

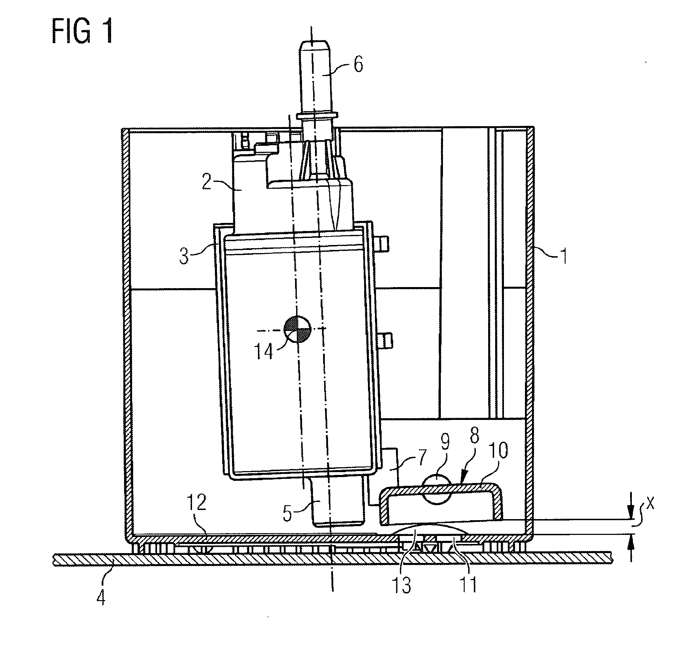

Die in Figur 1 gezeigte Fördereinheit nach dem Stand der Technik besteht aus einem Schwalltopf 1 mit einer darin angeordneten Kraftstoffpumpe 2, die in einem Pumpenhalter 3 gelagert ist. Der Schwalltopf 1 ist gegen den Boden eines Kraftstoffbehälters 4 vorgespannt. Die Kraftstoffpumpe 2 besitzt einen Einlassstutzen 5, über den sie Kraftstoff aus dem Schwalltopf 1 ansaugt und über den Auslass 6 zu einer nicht dargestellten Brennkraftmaschine des Kraftfahrzeugs fördert. Die Kraftstoffpumpe 2 ist über eine Verbindung 7 mit einer Saugstrahlpumpe 8 verbunden. Die Saugstrahlpumpe 8 wird mittels eines nicht dargestellten Treibstrahls angetrieben, der von der Kraftstoffpumpe 2 oder einer ebenfalls nicht dargestellten Rücklaufleitung von der Brennkraftmaschine entnommen wird. Der Treibstrahl tritt in das angedeutete, in die Zeichenebene hinein ausgerichtete Mischrohr 9 ein. Der in das Mischrohr eintretende Treibstrahl erzeugt in einem Ansaugbereich 10 einen Unterdruck, wodurch Kraftstoff aus dem Tank 4 über eine Öffnung 11 im Boden 12 des Schwalltopfes 1 angesaugt und über das Mischrohr 9 in den Schwalltopf 1 gefördert wird. Der Ansaugbereich 10 ist so gestaltet, dass er die Öffnung 11 im Boden 12 des Schwalltopfes 1 überdeckt. Ein in der Öffnung 11 angeordnetes Ventil 13 verhindert ein Leerlaufen des Schwalltopfes, wenn die Saugstrahlpumpe 8 nicht in Betrieb ist. In der gezeigten Darstellung ist die Kraftstoffpumpe 2 aufgrund von während des Fahrens auftretenden Kräften um einen Drehpunkt 14 verschwenkt. Der Drehpunkt 14 kann der Masseschwerpunkt der Kraftstoffpumpe 2 oder die Aufhängung der Kraftstoffpumpe 2 im Pumpenhalter 3 sein. Infolge des Verschwenkens der Kraftstoffpumpe 2 wird die Saugstrahlpumpe 8 über die beliebig gestaltbare Verbindung 7 mitverschwenkt. Das hat zur Folge, dass sich der untere Rand des Ansaugbereichs 10, mit dem die Saugstrahlpumpe 8 normalerweise auf dem Boden 12 aufliegt, in einem Abstand x oberhalb des Bodens 12 befindet. Mit dem Abheben des Ansaugbereichs 10 kommt es zu einem Druckausgleich mit der Umgebung, wodurch der Unterdruck im Ansaugbereich 10 nicht mehr aufrechterhalten werden kann, so dass die Kraftstoffförderung der Saugstrahlpumpe 8 zusammenbricht.

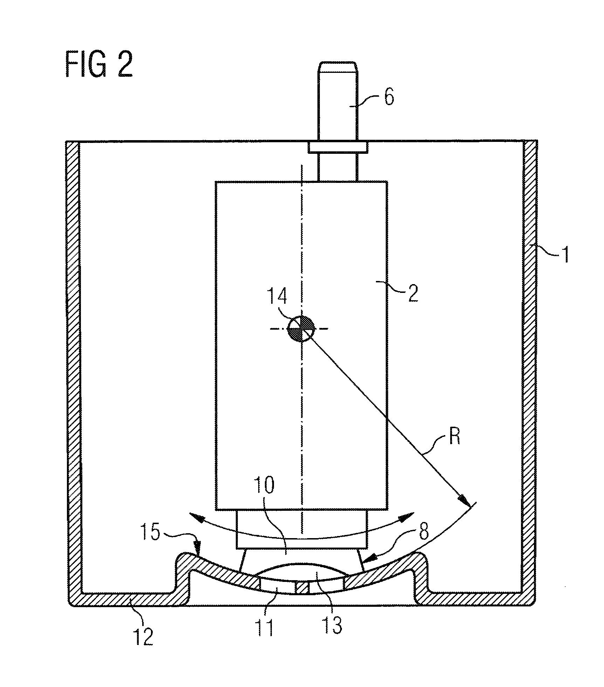

Die in Figur 2 dargestellte Fördereinheit zeigt die Kraftstoffpumpe 2, deren Einlassstutzen nicht dargestellt ist. Der Schwalltopf 1 weist im Boden 12 einen Bereich in Form einer konkav ausgebildeten Wölbung 15 auf. Der Radius R der Wölbung entspricht dem Radius des Schwenkbereichs des Ansaugbereichs 10 der Saugstrahlpumpe 8. Der aus Kunststoff bestehende Schwalltopf 1 ist mittels Spritzgießens hergestellt, so dass der Bereich der Wölbung 15 einteilig mit dem Boden 12 verbunden ist. Die Bewegung des Ansaugbereichs 10 über die Wölbung 15 ist mit einem Doppelpfeil verdeutlicht. Bei einer Auslenkung des Ansaugbereichs 10 gleitet dieser auf der Wölbung 15 entlang, so dass ein Abheben des Ansaugbereichs 10 von der Wölbung 15 vermieden wird. Dadurch wird der Unterdruck im Ansaugbereich 10 zuverlässig aufrechterhalten. Der Ansaugbereich 10 ist darüber hinaus so bemessen, dass auch bei einer Auslenkung desselben die Öffnung 11 immer vom Ansaugbereich 10 überdeckt bleibt.

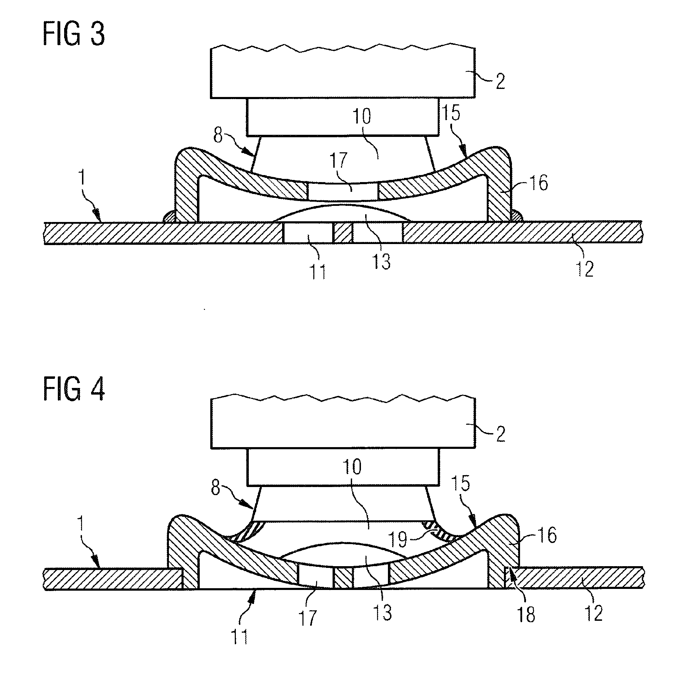

Figur 3 zeigt eine zweite Ausführungsform mit einem Schwalltopf 1, bei dem die konkav ausgebildete Wölbung 15 als separates Bauteil 16 mit dem Boden 12 des Schwalltopfes 1 verschweißt ist. Das Bauteil 16 überdeckt dabei die Öffnung 11 im Boden 12 des Schwalltopfes 1. Damit der Kraftstoff zur Saugstrahlpumpe 8 gelangen kann, weist das Bauteil 16 eine zweite Öffnung 17 auf. Das Leerlaufen des Schwalltopfes 1 wird durch das Ventil 13 verhindert, welches in der Öffnung 11 angeordnet ist. Es ist aber auch denkbar das Ventil 13 im Bereich der zweiten Öffnung 17 anzuordnen.

Bei der in Figur 4 dargestellten Anordnung ist die Öffnung 11 als Ausnehmung im Boden 12 des Schwalltopfes 1 so groß gestaltet, dass das separate Bauteil 16 in diese Öffnung 11 einsetzbar ist. Für die lagegenaue Montage des Bauteils 16 besitzt dieses einen radial umlaufenden Bund 18, mit dem das Bauteil 16 in die Öffnung 11 eingesetzt ist. Am Ansaugbereich 10 ist weiterhin eine Dichtung 19 angeordnet, die beim Verschwenken der Saugstrahlpumpe 8 die Dichtheit des Ansaugbereichs 10 gewährleistet.

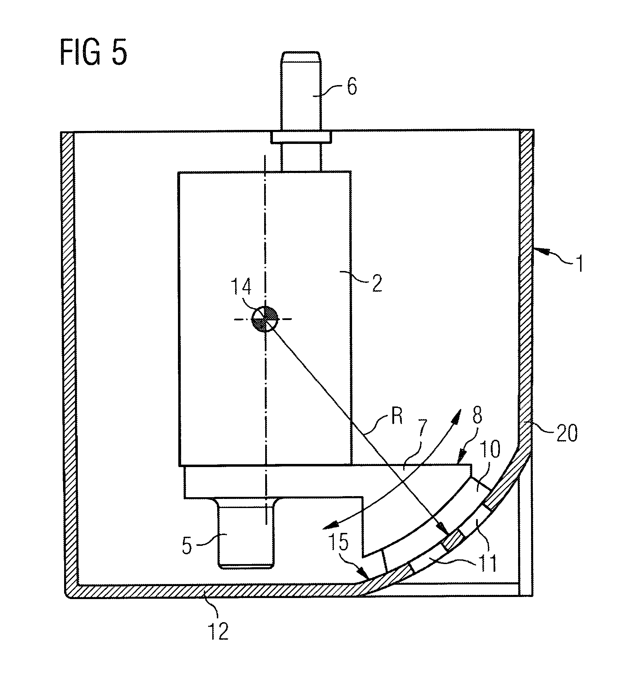

Figur 5 zeigt eine Fördereinheit mit einer Kraftstoffpumpe 2, deren dazugehörige Saugstrahlpumpe 8 im Bereich der Wandung 20 des Schwalltopfes 1 angeordnet ist. Die konkav ausgebildete Wölbung 15 erstreckt sich dabei bis in den Bereich der Wandung 20. Die konkav ausgebildete Wölbung 15 ist einteilig mit dem Boden 12 und der Wandung 20 ausgebildet. Durch die leicht geneigte Ausrichtung der Wölbung 15 gegenüber dem Boden 12 wird das Verschwenken der Saugstrahlpumpe 8 bis in den Randbereich ermöglicht.

## Patentansprüche

1. Fördereinheit mit einem Schwalltopf (1), einer darin angeordneten Kraftstoffpumpe (2) zum Fördern von Kraftstoff aus dem Schwalltopf (1), oder in seinem Boden oder im unteren Bereich seiner Seitenwand zumindest eine Öffnung (11) besitzt und einer mit der Kraftstoffpumpe (1) mechanisch verbundenen Saugstrahlpumpe (8) zum Fördern von Kraftstoff aus dem Kraftstoffbehälter (4) in den Schwalltopf (1), wobei die Saugstrahlpumpe (8) einen Ansaugbereich (10) aufweist, der mit der Öffnung (11) im Schwalltopf (1) verbunden ist, **dadurch gekennzeichnet, dass** im Boden (12) des Schwalltopfes (1) eine konkav ausgebildete Wölbung (15) angeordnet ist, deren Radius R dem Schwenkbereich des Ansaugbereichs (10) der Saugstrahlpumpe (8) angepasst ist, und dass die Öffnung (11, 17) im Bereich der Wölbung (15) angeordnet ist.

2. Fördereinheit nach Anspruch 1, **dadurch gekennzeichnet, dass** die konkav ausgebildete Wölbung (15) einteilig mit dem Boden (12) des Schwalltopfes (1) ausgebildet ist.

3. Fördereinheit nach Anspruch 1, **dadurch gekennzeichnet, dass** die konkav ausgebildete Wölbung (15) als separates Bauteil (16) am Boden (12) des Schwalltopfes (1) befestigt ist.

4. Fördereinheit nach Anspruch 3, **dadurch gekennzeichnet, dass** der Boden (12) des Schwalltopfes (1) eine Ausnehmung (11) besitzt, in welche das die konkav ausgebildete Wölbung (15) aufweisende Bauteil (16) eingesetzt ist.

5. Fördereinheit nach Anspruch 3, **dadurch gekennzeichnet, dass** im Boden (12) des Schwalltopfes (1) und in der konkav ausgebildeten Wölbung (15) eine Öffnung (11, 17) angeordnet ist und die konkav ausgebildete Wölbung (15) die Öffnung (11) im Boden (12) des Schwalltopfes (1) überdeckt.

6. Fördereinheit nach einem der vorhergehenden Ansprüche, **dadurch gekennzeichnet, dass** sich die konkav ausgebildete Wölbung (15) bis in den Bereich der Wandung (20) des Schwalltopfes (1) erstreckt.

7. Fördereinheit nach einem der vorhergehenden Ansprüche, **dadurch gekennzeichnet, dass** zwischen dem Ansaugbereich (10) und der konkav ausgebildeten Wölbung (15) eine am Ansaugbereich (10) befestigte Dichtung (1) angeordnet ist.

## Claims

1. Feed unit with a swirl pot (1), a fuel pump (2) arranged therein for feeding fuel out of the swirl pot (1), which has at least one opening (11) in its bottom or in the lower region of its side wall, and a suction jet pump (8), which is mechanically connected to the fuel pump (1), for feeding fuel out of the fuel tank (4) into the swirl pot (1), the suction jet pump (8) having an intake region (10) which is connected to the opening (11) in the swirl pot (1), **characterized in that** a concavely formed curvature (15) is arranged in the bottom (12) of the swirl pot (1), the radius R of which curvature is matched to the pivoting region of the intake region (10) of the suction jet pump (8), and **in that** the opening (11, 17) is arranged in the region of the curvature (15).

2. Feed unit according to Claim 1, **characterized in that** the concavely formed curvature (15) is formed as a single part with the bottom (12) of the swirl pot (1).

3. Feed unit according to Claim 1, **characterized in that** the concavely formed curvature (15) is fastened as a separate component (16) to the bottom (12) of the swirl pot (1).

4. Feed unit according to Claim 3, **characterized in that** the bottom (12) of the swirl pot (1) has a recess (11) into which the component (16) having the concavely formed curvature (15) is inserted.

5. Feed unit according to Claim 3, **characterized in that** an opening (11, 17) is arranged in the bottom (12) of the swirl pot (1) and in the concavely formed curvature (15), and **in that** the concavely formed curvature (15) covers the opening (11) in the bottom (12) of the swirl pot (1).

6. Feed unit according to one of the preceding claims, **characterized in that** the concavely formed curvature (15) extends into the region of the wall (20) of the swirl pot (1).

7. Feed unit according to one of the preceding claims, **characterized in that** a seal (1) fastened on the intake region (10) is arranged between the intake region (10) and the concavely formed curvature (15).

## Revendications

1. Unité d'alimentation comportant un pot d'accumulation (1), une pompe à carburant (2), placée dans le pot d'accumulation (1) et destinée à transférer du carburant hors du pot d'accumulation (1), qui a, dans son fond ou dans la partie inférieure de sa paroi latérale au moins une ouverture (11), et une pompe à jet aspirant (8), liée mécaniquement à la pompe à carburant (1) et destinée à transférer du carburant du réservoir à carburant (4) dans le pot d'accumulation (1), la pompe à jet aspirant (8) ayant une zone d'aspiration (10) liée à l'ouverture (11) dans le pot d'accumulation (1), **caractérisée par le fait que**, dans le fond (12) du pot d'accumulation (1), est ménagée une surface courbe concave (15) dont le rayon R est adapté à la plage de pivotement de la zone d'aspiration (10) de la pompe à jet aspirant (8) et que l'ouverture (11, 17) est disposée dans la zone de la surface courbe (15).

2. Unité d'alimentation selon la revendication 1, **caractérisée par le fait que** la surface courbe concave (15) est conçue en une seule pièce avec le fond (12) du pot d'accumulation (1).

3. Unité d'alimentation selon la revendication 1, **caractérisée par le fait que** la surface courbe concave (15) est fixée en tant que composant séparé (16) au fond (12) du pot d'accumulation (1).

4. Unité d'alimentation selon la revendication 3, **caractérisée par le fait que** le fond (12) du pot d'accumulation (1) a un évidement (11) dans lequel est inséré le composant (16) comportant la surface courbe concave (15).

5. Unité d'alimentation selon la revendication 3, **caractérisée par le fait que**, dans le fond (12) du pot d'accumulation (1) et dans la surface courbe concave (15), est disposée une ouverture (11, 17) et la surface courbe concave (15) recouvre l'ouverture (11) dans le fond (12) du pot d'accumulation (1).

6. Unité d'alimentation selon l'une des revendications précédentes, **caractérisée par le fait que** la surface courbe concave (15) s'étend jusque dans la zone de la paroi (20) du pot d'accumulation (1).

7. Unité d'alimentation selon l'une des revendications précédentes, **caractérisée par le fait que**, entre la zone d'aspiration (10) et la surface courbe concave (15), est disposé un joint (19) fixé à la zone d'aspiration (10).
